# EUROPEAN PATENT APPLICATION

(11) **EP 2 413 561 A1**
(43) Date of publication of application: **01.02.2012**
(21) Application number: 10305837.6
(22) Date of filing: 29.07.2010
(51) Int. Cl.: H04L 29/06, H04L 29/08, H04Q 11/00

(54) **Method for assigning a decentral station to a subscriber's data set, central station for a telecommunication's access network, and service using such method**

(71) Applicant: Alcatel Lucent, 75007 Paris (FR)
(72) Inventor: Krimmel, Heinz-Georg, 70825, Korntal-Muenchingen (DE); Diestelmans, Jan, 2440, Geel (BE)
(74) Representative: Brose, Gerhard

(57) **Abstract**

The invention relates to a method for assigning a decentral station to a subscriber's data set for a telecommunication's access network (Fig. 1) with a central station (CS) and a multiple of decentral stations (NTU) being linked to the central station (CS), where the central station (CS) determines at least one parameter for each decentral station (NTU) used for a correct operation of the respective link, wherein in the central station (CS) a reference to this at least one parameter is stored in the subscriber's data set associated to the respective decentral station (NTU) and is used for assigning the respective decentral station (NTU), to a central station for performing said method, and to a service using such method.

## Description

The invention relates to a method for assigning a decentral station to a subscriber's data set for a telecommunication's access network with a central station and a multiple of decentral stations being linked to the central station, where the central station determines at least one parameter for each decentral station used for a correct operation of the respective link.

The invention further relates to a central station for a telecommunication's access network with a central station and a multiple of decentral stations being connected to the central station where, for correct operations of the links, the central station determines at least one parameter for each decentral station.

The invention further relates to a method for rendering a service reporting user data related to a telecommunication's session involving a decentral station being linked to a central station.

The above mentioned techniques deal with the problem of performing the tasks for correct operation of the respective links, for example to adjust the gap between transmissions of different transmitters at different distances in a TDMA system (TDMA = Time Division Multiple Access). This gap has to be long enough to ensure to avoid overlap; it has to be as short as possible to reduce the overhead. In passive optical networks (PONs) as example of such TDMA systems, a gap of some few bits is reached.

Still another problem to be dealt with in such systems is the so-called AAA problem, where AAA means Authentication - Authorization - Accounting. The protocol used to deal with this problem is known as AAA protocol. It is to be ensured in such system that each subscriber gets exactly the information intended for him and no information not intended for him. It is also to be ensured that no subscriber has to pay for services that have been rendered to other subscribers and not to him and that the operator gets paid all services he rendered to whom-ever.

Nowadays subscribers usually may connect and disconnect their own equipment at any time, what from follows that AAA has to be applied practically at the beginning of each session, and sometimes even in between.

The misuse by faking a telecommunication's session of somebody else also is an increasing problem. This is not only of importance for the operator but moreover to partners in e-commerce.

This problem according to the invention is solved by a method for assigning a decentral station to a subscriber's data set for a telecommunication's access network with a central station and a multiple of decentral stations being linked to the central station, where the central station determines at least one parameter for each decentral station used for a correct operation of the respective link, wherein in the central station a reference to this at least one parameter is stored in the subscriber's data set associated to the respective decentral station and is used for assigning the respective decentral station.

This problem according to the invention further is solved by a central station for a telecommunication's access network with a central station and a multiple of decentral stations being linked to the central station, where, for correct operations of the links, the central station determines at least one parameter for each decentral station, wherein the central station is built such that a reference to those parameters is stored in the subscriber's data set associated to the respective decentral station and is used for assigning the respective decentral station.

The solution to this problem allows rendering a service reporting user data related to a telecommunication's session involving a decentral station being linked to a central station, wherein the central station renders such service by means of performing the method for assigning a decentral station to a subscriber's data set for a telecommunication's access network with a central station and a multiple of decentral stations being linked to the central station, where the central station determines at least one parameter for each decentral station used for a correct operation of the respective link, wherein in the central station a reference to this at least one parameter is stored in the subscriber's data set associated to the respective decentral station and is used for assigning the respective decentral station.

The invention is based on the insight, that the accuracy in measuring the delay is such high, namely corresponding to a difference in distance of some 20 cm, and the round-trip propagation delay of the links to the subscribers is such distributed with a high variance that practically a differentiation between the subscribers can be based on measuring the delay. In particular, a modification of a verified link can be detected with a very high reliability. Such insight is generalized insofar as, on the one hand there are also other parameters that are necessary for purposes of correct operation of the respective links and, on the other hand not only point-to-multipoint access networks but also those with mere point-to-point connections can benefit from the invention insofar, as misuse can be detected easily.

For example there are parameters that have to be individually adjusted for every link and that are such different from one another that an assignment of such parameters to individual subscriber's equipment can be based thereon. Other parameters are gathered for recognizing a deterioration of the respective link.

Further embodiments of the invention are to be found in the subclaims and in the following description.

In the following the invention will be described with the aid of the accompanying drawings, in which:

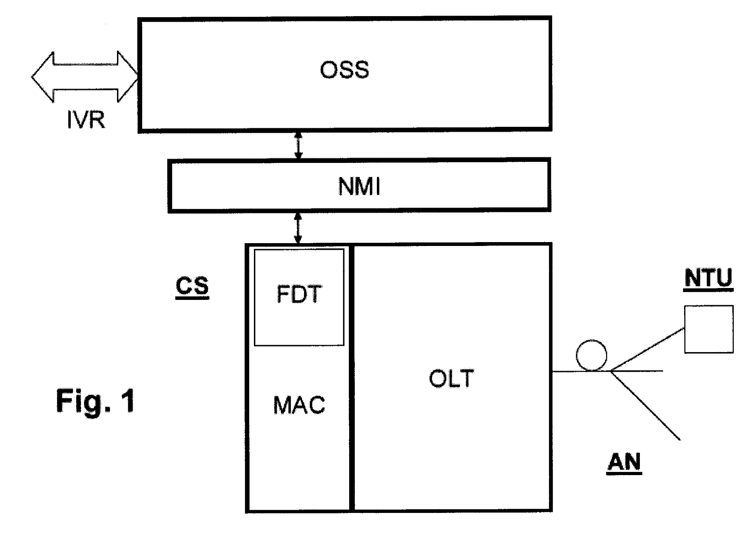

- Figure 1: shows a passive optical network as an example of a telecommunication's access network, in which a method according to the invention can be performed, that includes a central station according to the invention, and in which a service according to the invention can be rendered.

Figure 1 shows a Passive Optical Network (PON) with a central station CS, an access network AN, and a Network Terminating Unit NTU as an example of a decentral station.

The central station CS is shown as including an Optical Line Termination unit OLT, a MAC scheduler MAC, where MAC stands for Media Access Control, a Network Management Interface NMI, an Operations Support System OSS, and an Interface for Verification Requests IVR.

The MAC scheduler MAC in this example includes a Fiber Delay Table FDT including fiber delays (practically values representing distances and delays) to the respective network terminating unit NTU. This example in the following is elaborated.

In an other example the MAC scheduler MAC might include a table including filter coefficients, operating power levels or the like or a combination of such parameters. As already mentioned other parameters are gathered for recognizing a deterioration of the respective link. It is obvious to a person skilled in the art to replace or augment delays with other such parameters to likewise achieve the goals of this invention.

The access network AN contains a common part extending from the central station CS, a branching point, and a number of branches extending versus Network Terminating Units NTU, one of which is shown in the figure. In view of the already mentioned benefit to mere point-to-point connections the invention can also be applied to access networks other than Passive Optical Networks with containing common parts from the central station to a branching point.

During an ongoing session information flows in both directions between the optical line termination unit OLT at the central station's, central office's or operator's side and the network terminating unit NTU at the subscriber's side. The network terminating units NTU regularly report filling levels of transmit queues and demands for transmission capacity to the MAC scheduler MAC, which then assigns time slots by so-called transmit grants or in upstream slot allocation maps.

Apart from possible wavelength assignments a transmit grant is characterized by a period in time when a piece of information is to be transmitted. As the data propagation as such takes some time, namely the transmission delay, a reference point for the time is necessary and that is the arrival time at the central station CS. In order to arrive in time at the central station CS the clock at the network terminating unit NTU has to run in advance of the clock at the central station CS with an offset equal to the propagation delay.

To ensure this, from the line termination unit OLT at least from time to time the round-trip-delay from the central station CS to the network terminating unit NTU and back to the central station CS is measured. The results of such measurements are stored in the fiber delay table FDT.

To indicate how the invention could be adapted to using parameters other than delays, one should bear in mind that the optical line termination unit OLT may include a digital adaptive filter to adapt to the respective connection (e.g. optical line) to the network terminating unit NTU. Such filter has to be adapted separately for each transmission time slot, what is practically done by storing the respective coefficients used in the previous time frame granted to the same network terminating unit NTU, applying it again at the beginning of a next time frame granted to this network terminating unit NTU and adjusting it during such time frame before storing it again. Similarly the power levels to be used are handled.

Such procedures are also used in wireless access and insofar also the invention can be used there, at least when the wireless equipment is used stationary and in stable reflections environment.

Some of such parameters, like the round trip delay or the command to increase or decrease the power level, might be necessary to be known by both, the central station and the respective decentral station. In such case a respective signaling is necessary that could be tapped by an attacker. But even then it would be difficult or even impossible to mimic the respective decentral station by equipment of the attacker. Using more than one such parameter will increase the immunity against attackers.

In order to use such parameters for dealing with the above mentioned AAA problem, a link is to be enabled between the subscriber's data set and the parameters stored in the fiber delay table FDT or in similar tables. In case of a need to cope with this problem, this is performed via the Interface for Verification Requests IVR, the Operations Support System OSS, and the Network Management Interface NMI.

Once the possibility is given to verify the correct assignment between a given decentral station, e.g. a given subscriber's equipment, and a data set of the holder of such station a service can be established thereon. For example on request of a distant telecommunication's partner to a telecommunication's session involving such given decentral station a confirmation of the data of the holder of such given decentral station can be given.

A repeated determination of such parameters on the one hand can lead to sustain operation and maintenance purposes like recognizing deteriorations in the network and on the other hand is a means to detect sudden changes that can be both, a sign for an interruption of the link or a fraudulent tapping in of a cheater. In all such cases the generation of a respective message is suggested. Depending on the degree of the change different kinds of use of such message can be foreseen.

## Claims

1. Method for assigning a decentral station (NTU) to a subscriber's data set for a telecommunication's access network (Fig. 1) with a central station (CS) and a multiple of decentral stations (NTU) being linked to the central station (CS), where the central station (CS) determines at least one parameter for each decentral station (NTU) used for a correct operation of the respective link, **wherein** in the central station (CS) a reference to this at least one parameter is stored in the subscriber's data set associated to the respective decentral station (NTU) and is used for assigning the respective decentral station (NTU).

2. Method according to claim 1, **characterized in, that** for the assignation further subscriber specific parameters are used.

3. Method according to claim 1, **characterized in, that** one parameter for the assignation is a value representing distance and propagation delay of the link to the respective decentral station (NTU).

4. Method according to claim 1, **characterized in, that** at least one parameter for the assignation is derived from filter coefficients for proper use of the link to the respective decentral station (NTU).

5. Method according to claim 1, **characterized in, that** the determining of at least one parameter for a decentral station (NTU) is repeated during an ongoing session.

6. Method according to claim 5, **characterized in, that** on change of a determined parameter during an ongoing session a respective message is generated.

7. Central station (CS) for a telecommunication's access network (Fig. 1) with a central station (CS) and a multiple of decentral stations (NTU) being linked to the central station (CS), where, for correct operations of the links, the central station (CS) determines at least one parameter for each decentral station (NTU), **wherein** the central station (CS) is built such that a reference to those parameters is stored in the subscriber's data set associated to the respective decentral station (NTU) and is used for assigning the respective decentral station (NTU).

8. Method for rendering a service reporting user data related to a telecommunication's session involving a decentral station (NTU) being linked to a central station (CS), **wherein** the central station (CS) renders such service by means of performing the method according to claim 1.
